# FASCICULE DE BREVET EUROPEEN

(11) **EP 0 946 918 B1**
(45) Date de publication et mention de la délivrance du brevet: **09.10.2002**
(21) Numéro de dépôt: 97952957.5
(22) Date de dépôt: 17.12.1997
(51) Int. Cl.: G06F 15/02

(54) **DISPOSITIF ELECTRONIQUE PORTABLE AVEC ECRAN D'AFFICHAGE SELON PLUSIEURS DIRECTIONS**
TRAGBARES ELEKTRONISCHES GERÄT MIT MEHRRICHTUNGSBILDSCHIRM
PORTABLE ELECTRONIC DEVICE WITH DISPLAY SCREEN ALONG SEVERAL DIRECTIONS

(30) Priorité: 17.12.1996 FR 9615516
(43) Date de publication de la demande: 06.10.1999
(73) Titulaire: GEMPLUS, 13881 Gémenos Cédex (FR)
(72) Inventeur: VAUDANDAINE, Stéphane, F-13600 La Ciotat (FR)
(86) Numéro de dépôt international: FR9702346
(87) Numéro de publication internationale: WO98027495

(56) Documents cités:
- WO-A-94/19736
- WO-A-96/13008
- US-A- 4 481 598
- PATENT ABSTRACTS OF JAPAN vol. 15, no. 83 (P-1171), 26 février 1991 & JP 02 299010 A (KYOCERA CORPORATION), 11 décembre 1990,

## Description

L'invention concerne un dispositif électronique portable comprenant un écran d'affichage.

L'invention s'applique à tout dispositif muni d'un écran d'affichage et de moyens de commande de cet écran. On peut citer à titre d'exemple les calculatrices mais aussi tous les appareils de jeu interactifs portables.

WO-A-9419736 A (NORAND CORPORATION) décrit un dispositif portable de collecte et de traitement de données comportant des touches ou des surfaces sensibles constituant un clavier qui peuvent être réorientées par rapport au dispositif (p. 5-6), les dites touches étant réaffectées à de nouvelles fonctions et la direction d'affichage des données sur l'écran étant simultanément changée (p. 19, I. 10-32). Une telle opération peut être provoquée soit manuellement par l'opérateur - au moyen d'un interrupteur ou d'une combinaison de touches -, ou automatiquement, par exemple en détectant avec des capteurs l'orientation d'un masque (template 43) apposé sur le clavier pour indiquer les symboles associés à chaque touche (p. 19, I. 32 à p. 20).

EP-A-0390303 (KYOCERA CORPORATION) concerne un dispositif analogue (voir page 5, I. 55 à p. 6, I. 3 avec fig. 12 (a) 12(b) et 13, ainsi que p. 11, I. 31 à p. 12, I. 14 avec fig. 35 à 37), incluant un moyen de désignation (1₂ₐ) par l'opérateur de la direction d'affichage souhaitée. Alternativement, la détermination de la direction d'affichage peut être automatique, au moyen de capteurs (36) détectant la position de l'utilisateur par rapport au dispositif.

US-A-4481598 A (ISHIWATA) concerne un dispositif portable utilisé pour la conversion d'unités ou une calculette incluant des fonctions trigonométriques, dans lesquels une touche est affectée à une fonction parmi plusieurs fonctions prédéterminées, en réponse à une touche particulière de désignation (touche de désignation de conversion ou de fonction). La fonction actuellement exécutée par le dispositif et donc affectée aux touches peut être affichée sur un display annexe disposé près des touches (16A-16C).

La présente invention permet de fournir une interface homme-machine particulièrement adaptée à des dispositifs électroniques de petite taille communément dénommées portables.

L'invention a plus particulièrement pour objet un dispositif tel que décrit dans la revendication 1.

Les moyens de sélection sont soit automatiques soit manuels.

Dans le cas où les moyens de sélection sont automatiques ils comportent un détecteur de position d'utilisation du dispositif.

Dans le cas où les moyens de sélection sont manuels, ils comportent une touche dédiée à la sélection de chacune des directions d'affichage.

Selon un mode de réalisation, le dispositif comporte en outre plusieurs groupes de touches dont les fonctions dépendent de la direction d'affichage sélectionnée.

Selon un autre aspect de l'invention, le dispositif comporte une mémoire contenant un ou plusieurs programme(s) d'application et des moyens de sélection d'une application parmi l'ensemble des programmes d'application prévus.

Selon un autre aspect, les moyens de sélection d'application comportent les moyens de combinaison.

Dans une application particulière, le dispositif comporte des moyens de conversion d'une première information entrée au moyen d'un ou des deux groupes de touches et lisible sur l'écran dans la direction d'affichage sélectionnée, en une deuxième information lisible sur l'écran selon la deuxième direction d'affichage après sélection de cette deuxième direction d'affichage.

Les moyens de conversion pouvant être par exemple des moyens de conversion euros-francs.

L'écran d'affichage pourra être réalisé par une matrice multipoints et le nombre de direction d'affichage sera égal à deux ou supérieur.

L'écran d'affichage pourra être réalisé par une matrice de caractères type LCD et le nombre de direction d'affichage pourra alors être égal à deux.

Selon un autre aspect de l'invention, le dispositif électronique comporte une interface de lecture-écriture de carte à circuit intégré et une fente d'insertion aux dimensions adaptées à celle d'une carte.

L'invention s'applique particulièrement à la réalisation d'un convertisseur euros-francs.

L'invention s'applique tout particulièrement à la réalisation d'un lecteur de carte à puce.

L'invention s'applique également à la réalisation d'appareils de jeu interactif.

D'autres particularités et avantages de l'invention apparaîtront à la lecture de la description qui est faite à titre d'exemple illustratif et non limitatif et en regard des figures sur lesquelles :
- la figure 1, représente le schéma de principe d'un dispositif selon l'invention.
- la figure 2, représente le schéma d'un exemple de réalisation d'un dispositif selon l'invention,
- la figure 3, représente une vue de dessus selon la figure 2,
- la figure 4, représente le schéma d'un exemple de réalisation d'une touche,
- la figure 5, représente un schéma dynamique illustrant le mode d'utilisation du dispositif,
- la figure 6, représente un schéma fonctionnel des moyens de combinaison,
- la figure 7, représente le schéma d'une vue de dessus du dispositif selon l'application convertisseur euros-francs,
- la figure 8, représente le schéma d'une vue de dessus du dispositif selon l'application lecteur de carte à puce.

L'écran d'affichage 10 peut être réalisé soit par une matrice multipoints soit par une matrice de caractères de type LCD.

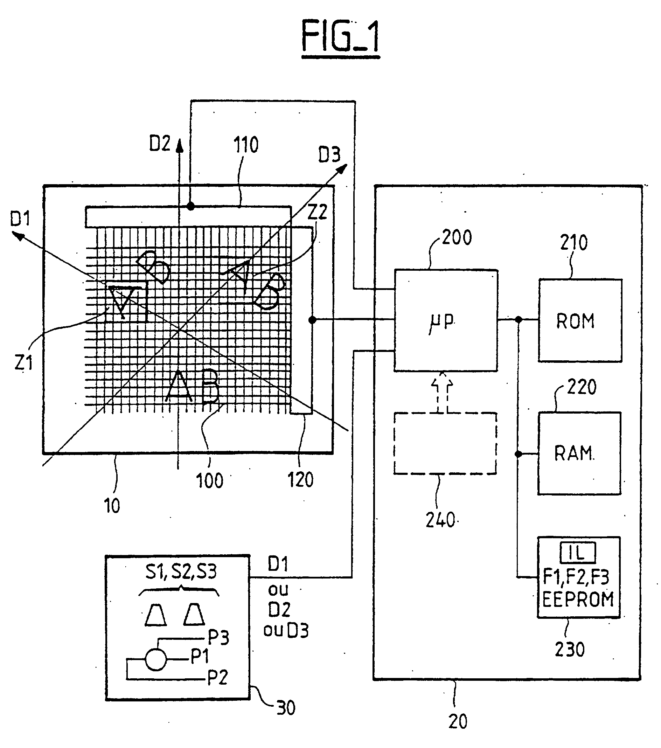

Sur la figure 1 on a représenté une matrice multipoints 100 à titre d'exemple.

De manière connue les lignes et les colonnes de la matrice sont reliées respectivement à un décodeur de ligne 110 et à un décodeur de colonne 120.

Les décodeurs 110 et 120 de l'écran 10 sont reliés à des moyens de commande 20 comprenant des moyens de commande d'affichage 200, 210.

Les moyens de commande sont réalisés par une unité de commande de type microprocesseur mettant en oeuvre le ou les programmes de commande d'affichage (ou driver en terminologie anglo-saxonne) enregistré(s) dans sa mémoire de programme 210.

Il est prévu selon l'invention un programme de commande d'affichage pour chacune des directions d'affichage.

Ainsi, un programme de commande d'affichage va permettre pour un même caractère, d'activer les lignes et les colonnes qui conviennent selon que l'affichage se fera suivant la direction D1 ou D2 ou D3 comme cela est illustré sur la figure 1.

Par exemple pour afficher la lettre A suivant la direction D1, ce sont des lignes et des colonnes permettant d'atteindre le pavé Z1 qui seront activées alors que pour afficher cette même lettre suivant la direction D3, ce sont des lignes et des colonnes permettant d'atteindre le pavé Z2 qui seront activées.

A cette fin le dispositif comporte en outre des moyens de sélection de la direction d'affichage 30.

L'information dépendant de la direction d'affichage délivrée par ces moyens est reçue par l'unité de traitement qui lance l'exécution du programme de commande d'affichage correspondant à cette direction.

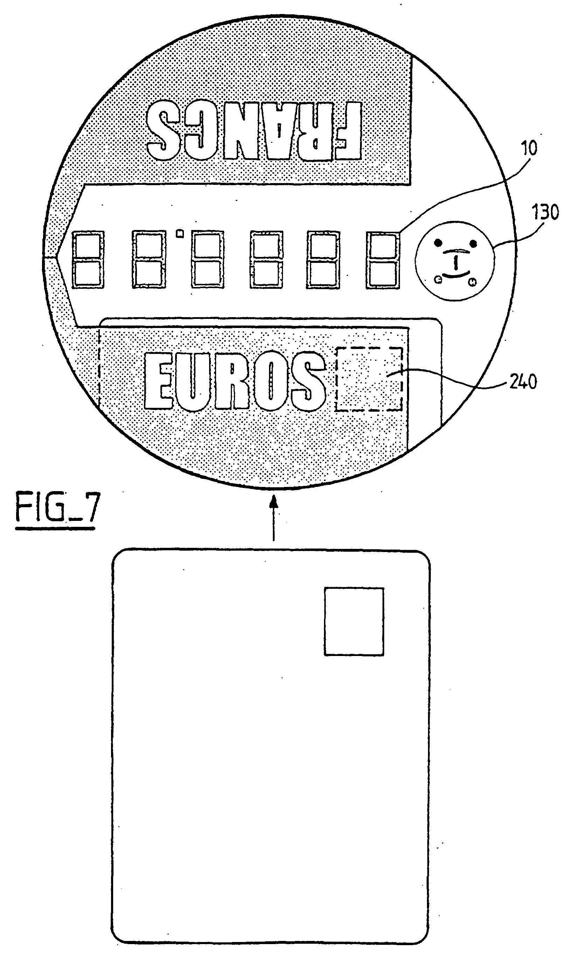

Le dispositif représenté sur cette figure pourra en outre comporter selon les applications qui vont être décrites dans la suite, une interface physique et logique IL de type connu de lecture et écriture d'une carte à puce connue cela sera précisé à propos de l'application illustrée par la figure 7.

L'interface physique est représentée en pointillé sur cette figure et porte la référence 240 et l'interface logique correspond à un programme référencé IL, classique, de lecture/écriture d'une carte à puce, chargé dans la mémoire 230 ou dans la mémoire 210.

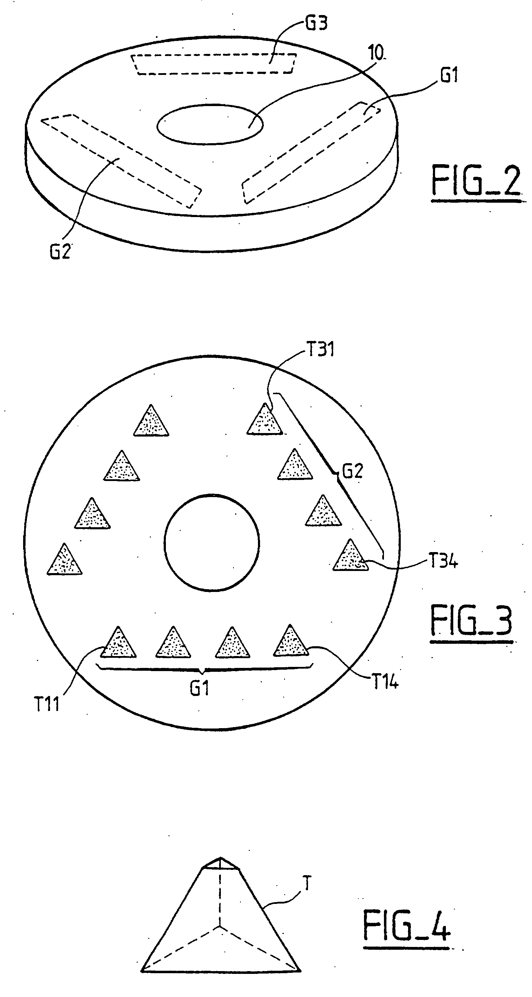

Les figures 2, 3 et 4 illustrent un exemple de réalisation d'un dispositif électronique selon l'invention.

La forme circulaire sera avantageuse pour la réalisation d'un convertisseur euros-francs.

L'allure du convertisseur pourra être celle d'une pièce de monnaie d'un diamètre d'environ 5cm.

Une telle forme pourra également convenir dans le cas de la réalisation d'un lecteur de carte à puce dès l'instant où le diamètre de ce dispositif et son épaisseur sont suffisants pour l'insertion d'une carte à puce au format standard.

Le dispositif peut ne comporter aucune touche. L'utilisateur n'aura dans ce cas, que la possibilité de lire des messages distincts selon les directions d'affichage sélectionnées par la position d'utilisation adoptée. Cette position est dans ce cas détectée de façon automatique par un détecteur de position constitué par exemple par une ampoule au mercure.

On utilisera avantageusement un tel dispositif pour la lecture de cartes porte monnaie électronique.

On a représenté sur la figure 2 un dispositif comportant au contraire trois groupes de touches G1, G2, G3. La notion de groupe n'est introduite que pour illustrer la répartition des touches sur le dispositif, l'ensemble formant une seule interface homme-machine.

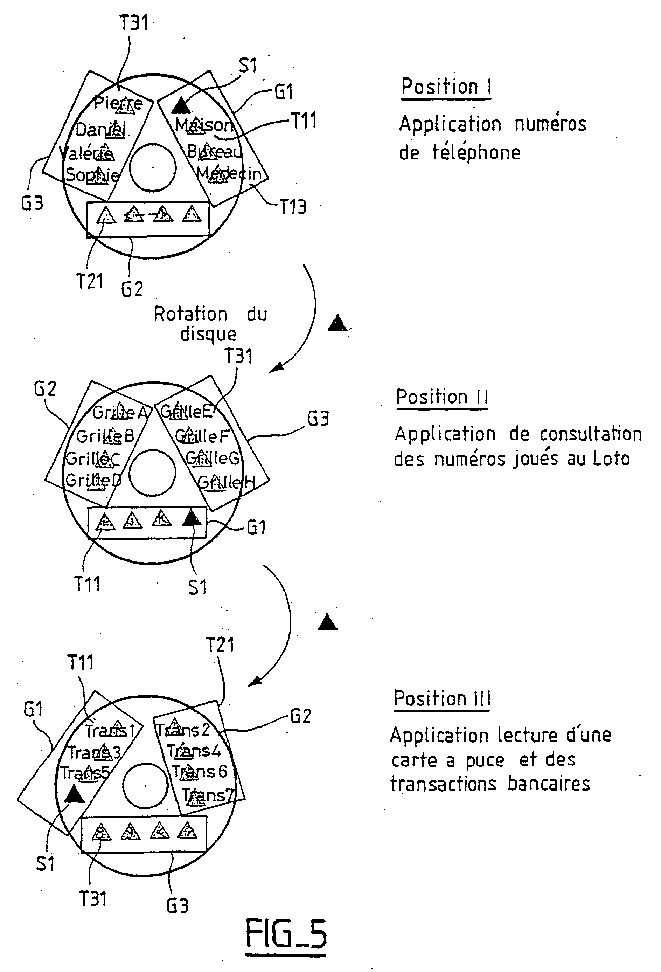

A titre d'exemple chaque groupe comporte quatre touches, cela est illustré par les figures 3 et 4. Un symbole (caractère alpha- numérique ou fonction) sera. représenté sur chaque facette de chaque touche.

La combinaison touche et information dépendant de la direction. d'affichage permet comme cela va être détaillé dans la suite d'avoir des fonctions différentes pour. chaque touche (touches multifonctions) et également de faire appel à différents programmes d'application (F1, F2, F3).

La figure 5 illustre un mode de réalisation particulier de l'invention.

Sur cet exemple, le dispositif comporte trois groupes de touches G1, G2, G3 comprenant chacun une touche dédiée à la sélection de la direction d'affichage référencée respectivement S1, S2, S3.

Pour une première position d'utilisation sélectionnée par la touche S1, le dispositif mettra en oeuvre un premier programme d'application par exemple le répertoire téléphonique.

Pour cela la mémoire non volatile 230 comporte les numéros à afficher en réponse à l'appui de chaque touche. La touche T11 du groupe G1 sélectionne le numéro de la maison, la touche T13 sélectionne le numéro du médecin, la touche T31 du groupe G3 sélectionne le numéro de Pierre.

Lorsque l'opérateur change la position d'utilisation du. dispositif par rotation comme cela est symbolisé sur la figure, il pourra sélectionner la direction d'affichage par la touche S2.

Le dispositif mettra alors en oeuvre un deuxième programme d'application par exemple la consultation des numéros joués au loto.

La touche T11 du groupe G1 sélectionne l'affichage du caractère I. La touche T31 sélectionne l'affichage de la grille E.

L'opérateur peut encore faire tourner le dispositif suivant une troisième position d'utilisation. L'opérateur pourra alors sélectionner la direction d'affichage par la touche S3.

Le dispositif va mettre alors en oeuvre un troisième programme d'application par exemple : lecture d'une carte à puce et des transactions bancaires (ou lecture d'une télécarte).

La touche T11 du groupe G1 sélectionne l'affichage de la première transaction (Trans 1).

La touche T31 du groupe G3 sélectionne l'affichage du caractère "8".

On voit par conséquent que le dispositif présente une interface homme-machine avec un nombre de touches limité mais qui combinées avec l'information "direction d'affichage" (ou position d'utilisation) lui confère un éventail de fonctions possibles.

On a décrit à propos de cet exemple l'utilisation de trois groupes de touches comprenant chacun une touche de sélection. Bien entendu, il peut être prévu de remplacer la fonction sélection manuelle (touches de sélection) par une fonction automatique (détecteur de position) sans que cela change le principe du fonctionnement qui a été décrit.

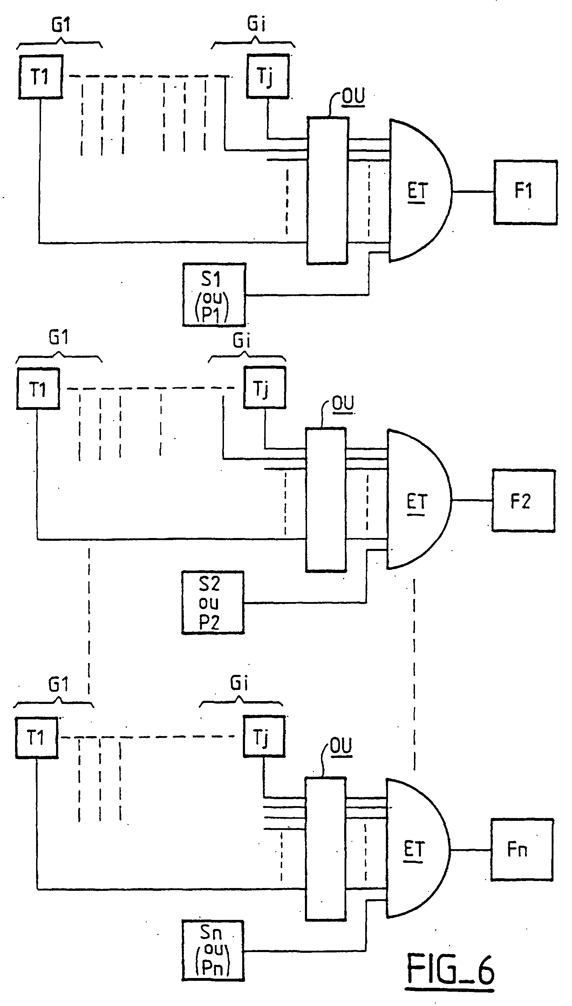

Le schéma de la figure 6, illustre la fonction combinaison qui vient d'être décrite. Elle est représentée par une porte OU suivie d'un ET logique qui donnent accès à l'application F1 ou F2 ou Fi selon que la touche S1 (ou position P1) ou la touche S2 (ou position P2) ou la touche S3 (ou position P3) aura été sélectionnée.

De façon pratique cette fonction sera assurée par l'unité de traitement qui recevra des circuits de décodage 110 et 120 des signaux générés par les contacts de touches T1,..Tj des groupes G1,... Gi et le signal issu de la touche de sélection ou du détecteur de position.

La figure 7, illustre l'application lecteur de carte à puce d'un tel dispositif.

Dans cette application le dispositif comporte en outre, comme cela a été dit une interface à la fois physique et logique de lecture de carte à puce. L'interface est de type connu et couramment utilisée dans les lecteurs existants.

Le lecteur de carte à puce ainsi réalisé pourra permettre d'afficher des informations stockées dans la carte. Dans le cas ou un tel lecteur n'a pas de touche lui permettant d'accéder à différentes applications, il pourra être utilisé pour la lecture des cartes porte monnaie électronique.

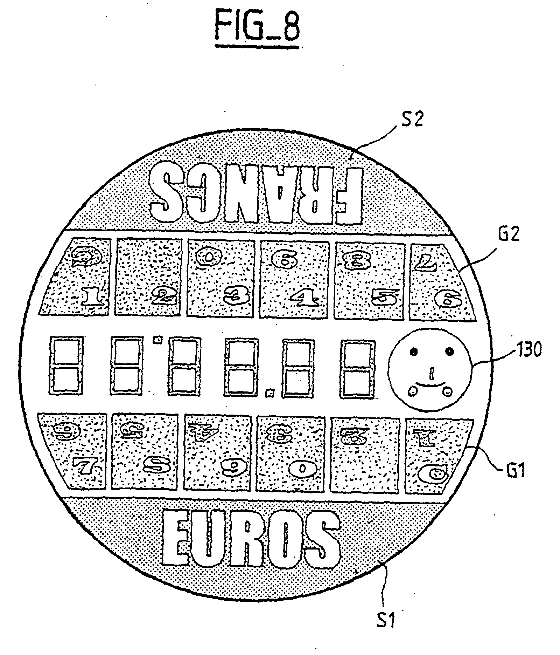

Un tel dispositif pourra bien sûr permettre d'assurer toute autre fonction déjà décrite indépendante de la carte, par exemple la fonction de conversion euros-francs illustrée par la figure 8.

On pourra cependant prévoir des groupes de touches comme cela vient d'être décrit à propos de la figure 5 pour accéder à différentes applications. Le déroulement de la lecture et/ou écriture pour ces applications est effectué pour l'unité de traitement du lecteur et des programmes d'application associée qu'elle contient en mémoire non volatile.

Dans tous les cas d' affichage, il est prévu pour la lecture de caractères numériques à partir d'un écran LCD, un indicateur visuel 130 donnant le sens de lecture.

La figure 8, illustre un dispositif selon l'invention apte à mettre en oeuvre une fonction de conversion d'une première information lisible suivant une première direction en une deuxième information (conversion de la première) lisible suivant une deuxième direction.

La fonction de conversion sera préférentiellement une conversion pour les eurps-francs.

Un programme de conversion est prévu à cet effet dans la mémoire non volatile du dispositif et l'exécution de ce programme sera lancée automatiquement pour le programme de fonctionnement en ROM de l'unité de traitement.

Le dispositif comporte dans ce cas, deux groupes de touches G1, G2.

Le montant en euro sera rentré à partir des touches qui conviennent du groupe G1 et G2 et s'affichera sur l'écran 10 selon l'indicateur 130.

La zone indiquée euros sur la figure pourra correspondre à une touche de sélection de direction d'affichage en l'absence de détecteur de position.

Pour obtenir la valeur convertie en franc l'opérateur n'aura qu'à retourner le dispositif (appuyer sur la touche de sélection franc si cette touche est présente) et lire le montant converti sur l'écran.
Dans tous les cas présentés dans la description, l'ordre de modifier la sélection d'une direction d'affichage peut venir de l'opérateur mais aussi bien entendu être prévu par les programmes d'application.

## Revendications

1. Dispositif électronique portable comportant un écran d'affichage (10), des moyens de commande d'affichage (200, 210) dudit écran, des moyens de sélection (30) d'une direction d'affichage parmi plusieurs directions prédéterminées (D₁, D₂, D₃), correspondant chacune à une position d'utilisation du dispositif, le dispositif étant **caractérisé en ce qu'**il comprend également des moyens aptes à fournir aux moyens de commande d'affichage un message à afficher, ledit message étant distinct selon la direction d'affichage sélectionnée.

2. Dispositif électronique selon la revendication 1 **caractérisé en ce que** les moyens de sélection (30) sont des moyens automatiques (P1, P2, P3).

3. Dispositif électronique selon les revendications 1 et 2, **caractérisé en ce que** les moyens de sélection automatiques comportent un détecteur de position d'utilisation du dispositif.

4. Dispositif électronique selon la revendication 1, **caractérisé en ce que** les moyens de sélection comportent une touche dédiée (S1, S2, S3) à la sélection de chacune des directions d'affichage.

5. Dispositif électronique selon l'une quelconque des revendications 1 à 4, **caractérisé en ce qu'**il comporte plusieurs groupes de touches (G1, G2, G3) dont les fonctions dépendent de la direction d'affichage sélectionnée.

6. Dispositif électronique selon l'une quelconque des revendications précédentes, **caractérisé en ce qu'**il comprend une mémoire (230) contenant plusieurs programmes d'application et des moyens de sélection d'une application parmi l'ensemble des programmes d'application prévus.

7. Dispositif électronique selon la revendication 6, **caractérisé en ce que** les moyens de sélection d'une direction d'affichage sont aussi des moyens de sélection d'une application.

8. Dispositif électronique selon l'une quelconque des revendications précédentes, **caractérisé en ce qu'**il comporte deux groupes de touches et deux touches de sélection de la direction d'affichage.

9. Dispositif électronique selon l'une quelconque des revendications précédentes, **caractérisé en ce qu'**il comporte des moyens de conversion (200, 230) d'une première information entrée au moyen d'au moins un groupe de touches et lisible sur l'écran dans la direction d'affichage sélectionnée, en une deuxième information lisible sur l'écran selon la deuxième direction d'affichage après sélection de cette deuxième direction d'affichage.

10. Dispositif électronique selon la revendication 9, **caractérisé en ce que** les moyens de conversion sont des moyens de conversion euro-franc, le dispositif assurant ainsi la fonction de convertisseur euros-francs.

11. Dispositif électronique selon l'une quelconque des revendications précédentes, **caractérisé en ce que** l'écran est une matrice multipoints.

12. Dispositif électronique selon l'une quelconque des revendications 1 à 10, **caractérisé en ce que** l'écran est une matrice de caractères LCD.

13. Convertisseur euros-francs selon l'une quelconques des revendications précédentes.

14. Dispositif électronique selon l'une quelconques des revendications précédentes **caractérisé en ce qu'**il comporte une interface de lecture-écriture (240, IL) de carte à circuit intégré et une fente d'insertion (250) aux dimensions adaptées à celle d'une carte.

15. Lecteur de carte à puce selon l'une quelconque des revendications précédentes.

16. Appareil de jeu interactif selon l'une quelconque des revendications 1 à 15.

## Patentansprüche

1. Tragbare elektronische Vorrichtung mit einem Anzeigebildschirm (10), Anzeigesteuermitteln (200, 210) des besagten Bildschirms, Auswahlmitteln (30) einer Anzeigerichtung aus verschiedenen vorbestimmten Richtungen (D1, D2, D3), wobei jede einer Arbeitsposition der Vorrichtung entspricht, wobei die Vorrichtung **dadurch gekennzeichnet ist, dass** sie ebenfalls Mittel umfasst, die geeignet sind, den Anzeigesteuermitteln eine anzuzeigende Meldung zu liefern, wobei besagte Meldung nach der ausgewählten Anzeigerichtung unterschiedlich ist.

2. Elektronische Vorrichtung gemäß Anspruch 1, **dadurch gekennzeichnet, dass** die Auswahlmittel (30) automatische Mittel (P1, P2, P3) sind.

3. Elektronische Vorrichtung gemäß Anspruch 1 und 2, **dadurch gekennzeichnet, dass** die automatischen Auswahlmittel einen Detektor der Arbeitsposition der Vorrichtung umfassen.

4. Elektronische Vorrichtung gemäß Anspruch 1, **dadurch gekennzeichnet, dass** die Auswahlmittel eine für die Auswahl jeder der Anzeigerichtungen dedizierte Taste (S1, S2, S3) umfassen.

5. Elektronische Vorrichtung gemäß Anspruch 1 bis 4, **dadurch gekennzeichnet, dass** sie mehrere Tastengruppen (G1, G2, G3) umfasst, deren Funktionen von der ausgewählten Anzeigerichtung abhängen.

6. Elektronische Vorrichtung gemäß einem der vorgenannten Ansprüche, **dadurch gekennzeichnet, dass** sie einen mehrere Anwendungsprogramme und Auswahlmittel 'einer Anwendung aus der Reihe der vorgesehenen Anwendungsprogramme umfassenden Speicher (230) umfasst.

7. Elektronische Vorrichtung gemäß Anspruch 6, **dadurch gekennzeichnet, dass** die Auswahlmittel einer Anzeigerichtung ebenfalls Auswahlmittel einer Anwendung sind.

8. Elektronische Vorrichtung gemäß einem der vorgenannten Ansprüche, **dadurch gekennzeichnet, dass** sie zwei Tastengruppen und zwei Auswahltasten der Anzeigerichtung umfasst.

9. Elektronische Vorrichtung gemäß einem der vorgenannten Ansprüche, **dadurch gekennzeichnet, dass** sie Umrechnungsmittel (200, 230) einer ersten mittels wenigstens einer Tastengruppe eingegebenen und auf dem Bildschirm in der ausgewählten Anzeigerichtung lesbaren Information in eine zweite auf dem Bildschirm gemäß der zweiten Anzeigerichtung nach Auswahl dieser zweiten Anzeigerichtung lesbare Information umfasst.

10. Elektronische Vorrichtung gemäß Anspruch 9, **dadurch gekennzeichnet, dass** die Umrechnungsmittel Euro-Franken-Umrechnungsmittel sind, wobei die Vorrichtung somit die Euro-Franken-Umrechnungs-Funktion gewährleistet.

11. Elektronische Vorrichtung gemäß einem der vorgenannten Ansprüche, **dadurch gekennzeichnet, dass** der Bildschirm eine Multipunktmatrix ist.

12. Elektronische Vorrichtung gemäß Anspruch 1 bis 10, **dadurch gekennzeichnet, dass** der Bildschirm eine Matrix mit Flüssigkristall-Buchstaben ist.

13. Euro-Franken-Umrechner gemäß einem der vorgenannten Ansprüche.

14. Elektronische Vorrichtung gemäß einem der vorgenannten Ansprüche, **dadurch gekennzeichnet, dass** sie eine Lese-Schreib-Schnittstelle (240, IL) für eine Karte mit integriertem Schaltkreis und einen Einführungsschlitz (250) mit den an die Abmessungen einer Karte angepassten Abmessungen umfasst.

15. Lesegerät für Chipkarten gemäß einem der vorgenannten Ansprüche.

16. Gerät für interaktives Spiel gemäß einem der vorgenannten Ansprüche 1 bis 15.

## Claims

1. A portable electronic device having a display screen (10), means (200, 210) for controlling the display on the said screen, means (30) of selecting a display direction amongst several predetermined directions (D₁, D₂, D₃), each corresponding to a position of use of the device, the device being **characterised in that** it also comprises means able to supply to the display control means a message to be displayed, the said message being distinct according to the display direction selected.

2. An electronic device according to Claim 1, **characterised in that** that selection means (30) are automatic means (P1, P2, P3).

3. An electronic device according to Claims 1 and 2, **characterised in that** the automatic selection means include a detector for the position of use of the device.

4. An electronic device according to Claim 1, **characterised in that** the selection means include a key (S1, S2, S3) dedicated to the selection of each of the display directions.

5. An electronic device according to any one of Claims 1 to 4, **characterised in that** it includes several groups of keys (G1, G2, G3) whose functions depend on the display direction selected.

6. An electronic device according to any one of the preceding claims, **characterised in that** it comprises a memory (230) containing several application programmes and means of selecting one application amongst all the application programmes provided.

7. An electronic device according to Claim 6, **characterised in that** the means of selecting a display direction are also means of selecting an application.

8. An electronic device according to any one of the preceding claims, **characterised in that** it has two groups of keys and two keys for selecting the display direction.

9. An electronic device according to any one of the preceding claims, **characterised in that** it has means (200, 230) of converting a first item of information input by means of at least one group of keys and able to be read on the screen in the display direction selected, and a second item of information which can be read on the screen in the second display direction after selection of this second display direction.

10. An electronic device according to Claim 9, **characterised in that** the conversion means are euro-franc conversion means, the device thus fulfilling the function of a euro-franc converter.

11. An electronic device according to any one of the preceding claims, **characterised in that** the screen is a multi-point matrix.

12. An electronic device according to any one of Claims 1 to 10, **characterised in that** the screen is a matrix of LCD characters.

13. A euro-franc converter according to any one of the preceding claims.

14. An electronic device according to any one of the preceding claims, **characterised in that** it has an integrated-circuit card read/write interface (240, IL) and an insertion slot (2.0) to the dimensions adapted to those of a card.

15. A smart-card reader according to any one of the preceding claims.

16. An interactive game apparatus according to any one of Claims 1 to 15.
